# EUROPÄISCHE PATENTANMELDUNG

(11) **EP 1 424 131 A2**
(43) Veröffentlichungstag der Anmeldung: **02.06.2004**
(21) Anmeldenummer: 03026351.1
(22) Anmeldetag: 18.11.2003
(51) Int. Cl.: B01L 3/14, C12N 15/10, G01N 30/60

(54) **Trennvorrichtung zur Behandlung von Biomolekülen**

(30) Priorität: 28.11.2002 DE 20218503 U
(71) Anmelder: Macherey, Nagel GmbH & Co. Handelsgesellschaft, 52355 Düren (DE)
(72) Erfinder: Möller, Klaus, Dr., 52249 Eschweiler (DE); Radmacher, Edmund, Dr., 52349 Düren (DE)
(74) Vertreter: Paul, Dieter-Alfred, Dipl.-Ing.

(57) **Zusammenfassung**

Die Erfindung bezieht sich auf eine Trennvorrichtung (1) zur Behandlung von Biomolekülen, insbesondere zur Isolierung von Nukleinsäuren, mit einer Trennsäule (2), die einen obenseitigen Einlaß (7) und einen untenseitigen Auslaß (8) aufweist und in der ein Trennmaterial (10) angeordnet ist, sowie mit einem Auffanggefäß (3) zum Auffangen der aus dem Auslaß (8) austretenden Flüssigkeit, wobei die Trennsäule (2) in das Auffanggefäß (3) eingesetzt und mit einem abnehmbaren Deckel (4) verschlossen ist, welche dadurch gekennzeichnet ist, daß die Innenräume von Auffanggefäß (3) und Trennsäule (2) zusätzlich zum Auslaß (8) der Trennsäule (2) eine Druckausgleichsverbindung (11, 12) haben.

## Beschreibung

Die Erfindung betrifft eine Trennvorrichtung zur Behandlung von Biomolekülen, insbesondere zur Isolierung von Nukleinsäuren, mit einer Trennsäule, die einen obenseitigen Einlaß und einen untenseitigen Auslaß aufweist und in der ein Trennmaterial angeordnet ist, sowie mit einem Auffanggefäß zum Auffangen der aus dem Auslaß austretenden Flüssigkeit, wobei die Trennsäule in das Auffanggefäß eingesetzt und mit einem abnehmbaren Deckel verschlossen ist.

Für die Gewinnung diagnostischer Aussagen über eventuell im Körper vorhandene Erreger oder über die besondere genetische Disposition eines Menschen hat es sich als vorteilhaft erwiesen, aus dessen Körperflüssigkeiten Nukleinsäuren oder Proteine in reiner Form zu isolieren. Hierzu werden im Stand der Technik Trennvorrichtungen verwendet, wie sie beispielsweise aus der DE 38 43 610 A1, WO 95/18851 und EP 0 940 676 A2 bekannt sind. Solche Trennvorrichtungen haben eine Trennsäule mit einem obenseitigen Einlaß zum Einfüllen von Flüssigkeit und einem untenseitigen Auslaß. In der Trennsäule ist Trennmaterial, beispielsweise in Form einer aus organischen oder anorganischen Materialien bestehenden Membran, fixiert. Die Trennsäule ist in ein Auffanggefäß eingesetzt.

Eine solche Trennvorrichtung ist zur Verwendung in einer Zentrifuge bestimmt. Die Zentrifuge dient dazu, den Durchfluß der über den Einlaß in die Trennsäule eingefüllten Flüssigkeit durch das Trennmaterial zu bewirken bzw. zu unterstützen und zu beschleunigen. Beim Durchfluß wird die Nukleinsäure an dem Trennmaterial - beispielsweise einer Silikamembran - gebunden. In einem zweiten Schritt werden die Verunreinigungen ausgewaschen und in einem dritten Schritt die auf diese Weise gereinigte Nukleinsäure eluiert. Hinsichtlich der Verfahrensweise kann auf die Beschreibung in der EP 0 940 676 Bezug genommen werden.

Bei der Handhabung solcher Trennvorrichtungen steht eine erhebliche Kontaminationsgefahr für die Umgebung und damit eine erhöhte Infektionsgefahr für die Bearbeiter der Körperflüssigkeit, insbesondere wenn es sich um Blutproben handelt. Deshalb wird die Trennsäule nach dem Einfüllen der jeweiligen Flüssigkeit vor dem Einsatz in der Zentrifuge mit einem Deckel möglichst flüssigkeitsdicht verschlossen. Dabei kann der Deckel auch das Auffanggefäß übergreifen und mit dem Auffanggefäß verschraubt sein (vgl. EP 0 940 676 A2).

Damit es beim Flüssigkeitstransfer von der Trennsäule in das Auffanggefäß nicht zu einem Unterdruck in der Trennsäule und einem Überdruck in dem Auffanggefäß kommt, sind die Trennsäule und/oder das Auffanggefäß im oberen Bereich so ausgebildet, daß der Innenraum des Auffanggefäßes Verbindung zur Außenatmosphäre hat, beispielsweise über dort vorhandene Belüftungsschlitze. Ohne einen solchen Druckausgleich käme es nach dem Ende des Flüssigkeitstransfers zu einem plötzlichen Druckausgleich durch einen Luftfluß in entgegengesetzter Richtung durch die Trennmaterialschicht. Diese würde aufgrund der dabei auftretenden Kräfte zerstört. Die Aufreinigung könnte nicht erfolgreich beendet werden, und die Probe wäre verloren.

Es ist nun festgestellt worden, daß die Zentrifuge trotz des Verschlusses der Trennsäule durch den Deckel mit Körperflüssigkeitsresten verunreinigt wird. Diese werden durch die Zentrifugalbewegung als Aerosol durch die Luftschlitze der Zentrifuge in den Laborraum verteilt und führen zur Kontamination der Umgebung und damit zu einer hohen Infektionsgefahr. Erst nach längeren Untersuchungen kam man zu der Erkenntnis, daß nach dem Trennvorgang und dem Entleeren des Auffanggefäßes Reste der Körperflüssigkeit an den Innenwänden des Auffanggefäßes haften bleiben und daß diese Reste nach dem erneuten Zusammenstecken von Trennsäule und Auffanggefäß zum Zwecke der Reinigung mittels eines Waschpuffers durch den in dem zweiten Zentrifugationsschritt erzeugten Überdruck im unteren Teil des Auffanggefäßes über die Belüftungsschlitze nach außen gedrückt werden und somit den Innenraum der Zentrifuge kontaminieren.

Der Erfindung liegt somit die Aufgabe zugrunde, eine Trennvorrichtung der eingangs genannten Art so auszubilden, daß einerseits eine Zerstörung des Trennmaterials nach Abschluß des Flüssigkeitstransfers vermieden wird, andererseits aber eine Kontamination der Umgebung durch aus dem Auffanggefäß ausgetriebene Flüssigkeit zuverlässig unterbunden wird.

Diese Aufgabe wird erfindungsgemäß dadurch gelöst, daß die Innenräume von Auffanggefäß und Trennsäule zusätzlich zum Auslaß der Trennsäule eine Druckausgleichsverbindung haben. Grundgedanke der Erfindung ist es also, das oben genannte Problem durch einen internen Druckausgleich zu vermeiden, der schon während des Flüssigkeitstransfers wirksam ist und auf diese Weise vermeidet, daß Reste von Körperflüssigkeit, die noch an den Innenwänden des Auffanggefäßes haften, aus diesem ausgetrieben werden und in die Umgebung gelangen. Es besteht somit aus diesem Grund keine Kontaminations- und damit Infektionsgefahr mehr.

In Ausbildung der Erfindung ist vorgesehen, daß das Auffanggefäß und die Trennsäule mit Hilfe des Deckels luftund/oder flüssigkeitsdicht verschlossen bzw. verschließbar ist. Durch den internen Druckausgleich ist ein solcher Verschluß möglich, denn hierdurch wird vermieden, daß es zur Bildung eines Differenzdrucks zwischen den Innenräumen von Trennsäule und Auffanggefäß und damit zu der Gefahr kommt, daß ein plötzlicher Druckausgleich nach Beendigung des Flüssigkeitstransfers durch das Trennmaterial hindurch entsteht und hierdurch das Trennmaterial zerstört wird oder der Flüssigkeitstransfer unvollständig ist. Die so ausgebildete Trennvorrichtung ist beim Einsatz in der Zentrifuge hermetisch geschlossen, so daß es unter keinen Umständen zu einem Austritt von infektionsgefährdenden Flüssigkeiten kommen kann.

In weiterer Ausgestaltung der Erfindung ist vorgesehen, daß der Deckel auf das Auffanggefäß in an sich bekannter Weise (vgl. EP 0 940 676) aufschraubbar bzw. aufgeschraubt ist und hierzu der Deckel hutförmig ausgebildet und über ein Gewinde auf die Außenseite des Auffanggefäßes aufgeschraubt ist. Er kann aber auch aufgesteckt und dann über Raststege festgehalten sein. Dabei ist es zweckmäßig, wenn die Trennsäule einen Randsteg aufweist, der über den Deckel abdichtend auf das Auffanggefäß gedrückt wird. Der Randsteg ist vorteilhafterweise am Einlaß der Trennsäule angeformt und liegt dann auf dem oberen Rand des Auffanggefäßes auf. Es bietet sich dann an, daß der Randsteg zwischen Deckel und Auffanggefäß eingeklemmt ist.

Die Druckausgleichsverbindung ist vorteilhafterweise als eine Durchgangsöffnung im oberen Bereich der Trennsäule ausgebildet, damit das zulässige Flüssigkeitsniveau in der Trennsäule nach dem Einfüllen nicht wesentlich eingeschränkt wird. Zu der Druckausgleichsverbindung sollte ein Druckausgleichskanal zwischen Trennsäule und Auffanggefäß gehören, der gegebenenfalls Verbindung zu der Durchgangsöffnung hat. Der Druckausgleichskanal kann eine vertikale Nut in der Innenseite des Auffanggefäßes und/oder der Außenseite der Trennsäule aufweisen. Zweckmäßig ist jedoch auch das Vorsehen eines Ringspaltes zwischen beiden, der ausreichend groß ist, um einen ständigen Druckausgleich zu ermöglichen.

Nach der Erfindung ist schließlich vorgesehen, daß das eingeschlossene Volumen des Auffanggefäßes unterhalb des unteren Endes des Auslasses der Trennsäule wenigstens 1,5-mal, vorzugsweise zweimal so groß ist wie das freie Volumen der Trennsäule unterhalb des Eintritts der Druckausgleichsverbindung in den Innenraum der Trennsäule. Aufgrund dieses Volumenverhältnisses wird vermieden, daß der Auslaß und/oder die Unterseite der Trennsäule mit der in das Auffanggefäß austretenden Flüssigkeit benetzt wird und beim Herausnehmen der Trennsäule aus dem Auffanggefäß zu einer Kontamination führt.

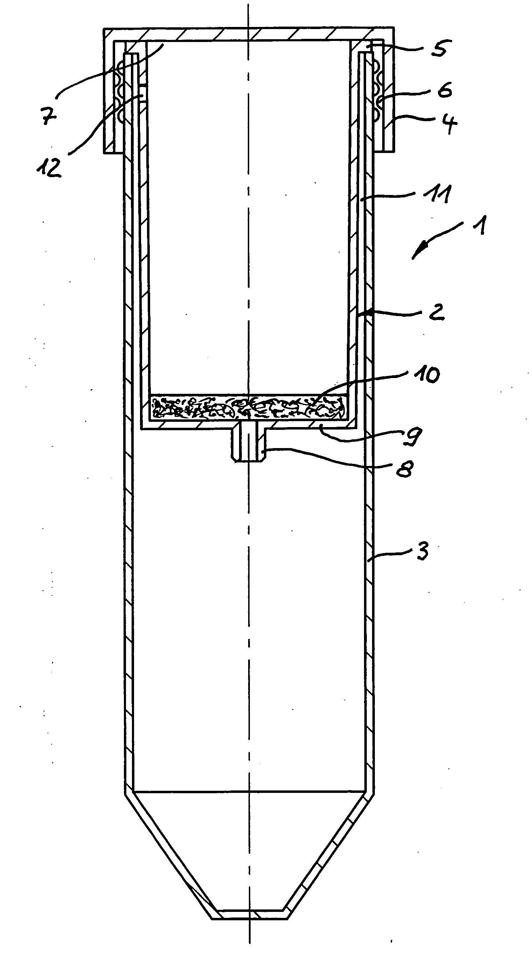

In der Zeichnung ist die Erfindung anhand eines Ausführungsbeispiels näher veranschaulicht. Sie zeigt im Vertikalschnitt eine Trennvorrichtung 1 zur Behandlung von Biomolekülen. Die Trennvorrichtung 1 ist dreiteilig aufgebaut. Sie besteht aus einer zylindrischen Trennsäule 2, einem ebenfalls zylindrischen Auffanggefäß 3 und einem hutförmigen Deckel 4.

Die Trennsäule 2 ist nahezu vollständig in das Auffanggefäß 3 teleskopartig eingesetzt. Sie hat am oberen Rand einen nach außen vorstehenden Ringsteg 5, der auf der oberen Stirnseite des Auffanggefäßes 3 aufliegt. Der Dekkel 4 überspannt sowohl die Trennsäule 2 als auch das Auffanggefäß 3 und ist über ein Gewinde 6 auf die Außenseite des Auffanggefäßes 3 aufgeschraubt. Dabei wird der Ringsteg 5 in diesem Zustand zwischen der Innenseite des Deckels 4 und der oberen Stirnseite des Auffanggefäßes 3 jeweils abdichtend verklemmt.

Die Trennsäule 2 weist obenseitig einen Einlaß 7 und untenseitig einen tüllenförmigen Auslaß 8 auf. Die Trennsäule 2 weist im Bereich des Auslasses 8 einen ringförmigen Absatz 9 auf, auf der eine Silikamembran 10 aufliegt und abgestützt wird.

Die zylindrische Außenseite der Trennsäule 2 und die Innenseite des Auffanggefäßes 3 haben Abstand zu einander, so daß zwischen ihnen ein Ringspalt 11 vorhanden ist. Durch hier nicht näher dargestellte Distanzvorsprünge kann sichergestellt werden, daß der Ringspalt 11 über den gesamten Umfang die gleiche Breite hat. Im oberen Bereich weist die Trennsäule 2 eine Durchgangsöffnung 12 auf, die mit dem Ringspalt 11 eine Druckausgleichsverbindung zwischen dem Innenraum der Trennsäule 2 und dem unteren Bereich des Innenraums des Auffanggefäßes 3 herstellt. Auf diese Weise wird das Entstehen von Druckdifferenzen zwischen beiden Innenräumen insbesondere in der Zentrifuge vermieden.

Zur Isolierung von Nukleinsäuren aus einer Körperflüssigkeit wie Blut wird der Deckel 4 abgenommen, die Körperflüssigkeit über den Einlaß 7 in die Trennsäule 2 einpippetiert und dann der Deckel 4 wieder aufgeschraubt. Dann wird die Trennvorrichtung 1 als Ganzes in eine Zentrifuge so eingesetzt, daß auf die Trennvorrichtung 1 eine in Längsrichtung auf den Boden des Auffanggefäßes 3 gerichtete Zentrifugalkraft einwirkt. Hierdurch wird der Transfer der Flüssigkeitsprobe durch die Silikamembran 10 bewirkt. Dabei wird die Nukleinsäure an der Silikamembran 10 gebunden. Die Flüssigkeit tritt dann über den Auslaß 8 in den Innenraum des Auffanggefäßes 3 ein und sammelt sich dort am Boden. Während dieses Vorgangs findet ständig ein Druckausgleich zwischen den Innenräumen von Trennsäule 2 und Auffanggefäß 3 über den Ringspalt 11 und die Durchgangsöffnung 12 statt, so daß es nach Beendigung des Flüssigkeitstransfers nicht zu einem plötzlichen Druckausgleich über den Auslaß 8 kommt.

Nach dem ersten Zentrifugationsschritt wird der Deckel 4 wieder geöffnet. Es besteht nun die Möglichkeit, die Trennsäule 2 herauszunehmen und das Auffanggefäß 3 zu entleeren. Sofern noch ausreichend Raum zwischen dem Flüssigkeitsspiegel im Auffanggefäß 3 und dem Auslaß 8 der Trennsäule 2 besteht, kann darauf verzichtet werden. Es wird dann ein Waschpuffer in die Trennsäule 2 eingefüllt und die Trennvorrichtung 1 durch Aufsetzen des Dekkels 4 wieder verschlossen. Die Trennvorrichtung 1 wird dann einem weiteren Zentrifugationsschritt unterworfen, bei dem der Waschpuffer durch die Silikamembran 10 getrieben wird und dabei die Verunreinigungen mitnimmt. Auch hier kommt es wieder zu einem internen Druckausgleich zwischen den Innenräumen von Trennsäule 2 und Auffanggefäß 3 mit der Folge, daß in dem Auffanggefäß 3 kein Überdruck entsteht, der nach Abschluß des Flüssigkeitstransfers die Silikamembran 10 zerstören oder bei Undichtigkeit des Deckels 4 in die Außenatmosphäre gelangen könnte.

Nach Abschluß des Waschvorgangs - er kann mehrstufig erfolgen - wird der Deckel 4 abgenommen, die Trennsäule 2 aus dem Auffanggefäß 3 entfernt und das Auffanggefäß 3 entleert. Das Auffanggefäß 3 wird dann entweder gereinigt oder durch ein neues Auffanggefäß ersetzt. Dann wird die Trennsäule 2 wieder in das Auffanggefäß 3 eingesetzt. In die Trennsäule 2 wird ein Elutionspuffer eingefüllt, und nach Verschluß durch den Deckel 4 wird die Trennvorrichtung 1 einem erneuten Zentrifugationsschritt unterworfen. Hierbei wird die Nukleinsäure aus der Silikamembran 10 eluiert und in dem Auffanggefäß 3 gesammelt. Sie steht dann für weitere Analysen zur Verfügung.

## Patentansprüche

1. Trennvorrichtung (1) zur Behandlung von Biomolekülen, insbesondere zur Isolierung von Nukleinsäuren, mit einer Trennsäule (2), die einen obenseitigen Einlaß (7) und einen untenseitigen Auslaß (8) aufweist und in der ein Trennmaterial (10) angeordnet ist, sowie mit einem Auffanggefäß (3) zum Auffangen der aus dem Auslaß (8) austretenden Flüssigkeit, wobei die Trennsäule (2) in das Auffanggefäß (3) eingesetzt und mit einem abnehmbaren Deckel (4) verschlossen ist, **dadurch gekennzeichnet, daß** die Innenräume von Auffanggefäß (3) und Trennsäule (2) zusätzlich zum Auslaß (8) der Trennsäule (2) eine Druckausgleichsverbindung (11, 12) haben.

2. Trennvorrichtung nach Anspruch 1, **dadurch gekennzeichnet, daß** Auffanggefäß (3) und Trennsäule (2) über den Deckel (4) luft- und/oder flüssigkeitsdicht verschlossen bzw. verschließbar sind.

3. Trennvorrichtung nach Anspruch 1 oder 2, **dadurch gekennzeichnet, daß** der Deckel (4) auf das Aufanggefäß (3) aufgeschraubt bzw. aufschraubbar oder aufgesteckt oder aufsteckbar ist.

4. Trennvorrichtung nach Anspruch 3, **dadurch gekennzeichnet, daß** der Deckel (4) hutförmig ausgebildet und über ein Gewinde (6) auf die Außenseite des Auffanggefäßes (3) aufgeschraubt bzw. aufschraubbar ist.

5. Trennvorrichtung nach einem der Ansprüche 1 bis 4, **dadurch gekennzeichnet, daß** die Trennsäule (2) einen Randsteg (5) aufweist, der über den Deckel (4) abdichtend auf das Auffanggefäß (3) gedrückt ist.

6. Trennvorrichtung nach Anspruch 5, **dadurch gekennzeichnet, daß** der Randsteg (5) am Einlaß (7) angeformt ist.

7. Trennvorrichtung nach Anspruch 6, **dadurch gekennzeichnet, daß** der Randsteg (5) auf dem oberen Rand des Auffanggefäßes (3) aufliegt.

8. Trennvorrichtung nach einem der Ansprüche 5 bis 7, **dadurch gekennzeichnet, daß** der Randsteg (5) zwischen Deckel (4) und Auffanggefäß (3) eingeklemmt ist.

9. Trennvorrichtung nach einem der Ansprüche 1 bis 8, **dadurch gekennzeichnet, daß** die Druckausgleichsverbindung eine Durchgangsöffnung (12) im oberen Bereich der Trennsäule (2) aufweist.

10. Trennvorrichtung nach einem der Ansprüche 1 bis 9, **dadurch gekennzeichnet, daß** zu der Druckausgleichsverbindung ein Druckausgleichskanal (11) zwischen Trennsäule (2) und Auffanggefäß (3) gehört.

11. Trennvorrichtung nach Anspruch 10, **dadurch gekennzeichnet, daß** der Druckausgleichskanal (10) als Ringspalt (11) ausgebildet ist.

12. Trennvorrichtung nach einem der Ansprüche 1 bis 11, **dadurch gekennzeichnet, daß** das eingeschlossene Volumen des Auffanggefäßes (3) unterhalb des unteren Endes des Auslasses (8) der Trennsäule (2) wenigstens 1,5-mal so groß ist wie das freie Volumen der Trennsäule (2) unterhalb des Eintritts der Druckausgleichsverbindung (11, 12) in dem Innenraum der Trennsäule (2).
